# EUROPEAN PATENT APPLICATION

(11) **EP 3 792 088 A1**
(43) Date of publication of application: **17.03.2021**
(21) Application number: 19197505.1
(22) Date of filing: 16.09.2019
(51) Int. Cl.: B60H 1/04, B60H 1/14, B60H 1/32, B01D 53/14, B01D 53/26, C09K 5/04, C09K 5/10

(54) **VEHICLE SYSTEM AND PROCESS FOR EFFICIENT USE OF WASTE HEAT FROM THE POWER UNIT**

(71) Applicant: Evonik Operations GmbH, 45128 Essen (DE)
(72) Inventor: WANG, Dr. Xinming, 242-0003 Kanagawa-ken (JP); AOKI, Tetsuji, 350-1115 Saitama-ken (JP); SCHNEIDER, Rolf, 63584 Gründau-Rothenbergen (DE); KERL, Dr. Thomas, 45130 Essen (DE); DÄSCHLEIN, Dr. Christian, 44625 Herne (DE)
(74) Representative: Evonik Patent Association

(57) **Abstract**

A vehicle in which waste heat from the vehicle power unit is used to drive a water absorption cycle and a process for combined cooling of a power unit and absorbing water in a vehicle. The absorbent contacts the power unit directly, which allows for a highly efficient transfer of the power unit waste heat onto the absorbent. The device and the process can be implemented in the context of a vehicle, wherein the waste heat from the motor or battery is used to dehumidify air. Alternatively, the waste heat is used to drive an absorption refrigeration machine that is used to cool the inside of the vehicle or other vehicle components.

## Description

The present invention pertains to a vehicle in which waste heat from the vehicle power unit is used to drive a water absorption cycle. The invention also pertains to a process for combined cooling of a power unit and absorbing water in a vehicle. The gist of the invention lies in the feature that the absorbent contacts the power unit directly, which allows for a highly efficient transfer of the power unit waste heat onto the absorbent. The device and the process according to the invention can be implemented in the context of a vehicle, wherein the waste heat from the motor or battery is used to dehumidify air. Alternatively, the waste heat is used to drive an absorption refrigeration machine that is used to cool the inside of the vehicle or other vehicle components.

### 1. Technological Background

With the mega trend of electrical and electrical/engine hybrid vehicles, high efficiency cooling for batteries and motors is highly demanded. Correspondingly, engines, batteries, or other power units in the industrial context generate waste heat that for sake of energy efficiency should be used better than being dissipated into the environment.

In the prior art, several systems are described that furnish waste heat from power units for different tasks.

US 2006/0130469 A1 describes a combined system in which combustion heat from a burner can be transmitted to a circuit for heating or cooling parts of the vehicle.

JP S57-81910 U, JPH 03-112718 A, and JP H03-193525 A describe systems in which a coolant absorbs heat from a motor. The coolant is then contacted with an absorbent comprising lithium bromide and water. The water is then at least partially evaporated by using heat from the coolant, the obtained water vapour is condensed and evaporated again, thereby using heat from the inside of the car. By this, cooling of the motor is combined with cooling of the interior of the car.

US 2012/0031131 A1 similarly describes an absorption refrigeration machine in a vehicle which uses heat from a power unit device. The working fluids used in the circuit of the absorption refrigeration machine are lithium bromide/water and ammonia/water.

JP 2002-234336 A describes a car comprising an absorption-type refrigeration machine that uses sunlight to cool the inside of the car when the car is parked.

JP 2012-141101 A describes an absorption refrigeration machine for cooling the inside of a car or a house which uses energy from a solar heat collector. It discloses organic refrigerants methanol and acetone which display less corrosiveness as compared to lithium bromide/water or ammonia/water.

JP H11-159905 A describes an air conditioner that uses another organic refrigerator, namely fluorocarbon gases such as R-134a and R-22.

The vehicle systems described in the prior art use waste heat from the power unit of the vehicle to drive an absorption refrigeration machine that is used to cool the interior of a car. These systems rely on the efficient transfer of energy from the power unit, in this case the motor, to the aqueous absorbent. There is a need in the art for a system in a vehicle in which the transfer of heat from the motor to the absorbent containing water is maximized.

The problem according to the invention is therefore the provision of a vehicle and a process in a vehicle wherein the transfer of heat from the power unit to the absorbent, which is preferably used in a refrigeration absorption machine, is further improved.

This problem is now surprisingly solved by the vehicle and the process according to the invention.

### 2. Summary of the Invention

In a first aspect, the invention relates to a vehicle, comprising:
(i) a liquid absorption medium **A_{VE},**
(ii) at least one water absorption unit **W_{abs},** which optionally comprises a heat exchanger, and which is set up for contacting a moist gas **G,** preferably water vapour, with the liquid absorption medium **A_{VE},** to obtain an aqueous liquid absorption medium **A_{VE}*** with an elevated water content compared to **A_{VE}** and a gas **G*** with a reduced water content compared to the moist **gas G,**
(iii) at least one water desorption unit **W_{des},** optionally comprising a heat exchanger,
(iv) and a circuit **U_{WAC}** which connects the at least one water absorption unit **W_{abs}** with the at least one water desorption unit **W_{des},** and by means of which the absorption media **A_{VE}** and **A_{VE}*** may be circulated between the water absorption unit **W_{abs}** and the water desorption unit **W_{des},**
(v) at least one power unit **PU,** which is preferably selected from the group consisting of motor **M,** battery **B,**
wherein the liquid absorption medium **A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion,
characterized in
that the water desorption unit **W_{des}** is set up
- to at least partially desorb water from liquid absorption medium **A_{VE}*** by transferring heat from the at least one power unit **PU** to liquid absorption medium **A_{VE}*,** to obtain water vapour **V_{H2O}** and liquid absorption medium **A_{VE}**** with a reduced water content compared to the liquid absorption medium **A_{VE}*,**
- and to conduct at least a part of liquid absorption medium **A_{VE}**** as liquid absorption medium **A_{VE}** from the water desorption unit **W_{des}** to the water absorption unit **W_{abs}.**

In a second aspect, the invention relates to a process for combined cooling of a power unit **PU,** and absorbing water from a moist gas **G,** preferably water vapour, in a vehicle, comprising the following steps:
(a) contacting a moist gas **G** with a liquid absorption medium **A_{VE},** to obtain a liquid absorption medium **A_{VE}*** with an elevated water content compared to the liquid absorption medium **A_{VE},** and a gas **G*** with a reduced water content compared to the moist gas **G,**
(b) at least partially desorbing water from liquid absorption medium **A_{VE}*** by transferring heat from power unit **PU** to liquid absorption medium **A_{VE}*,** to obtain water vapour **V_{H2O}** and liquid absorption medium **A_{VE}**** with a reduced water content compared to the liquid absorption medium **A_{VE}*,** wherein the liquid absorption medium **A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion.

### 3. Figures

Figure 1 A ("Figure" is abbreviated as "Fig") shows a preferred embodiment of a water desorption unit **W_{des}** <100> according to the invention, wherein the power unit **PU** <111> is immerged in absorption medium **A_{VE}**** <109**>.
Figure 1 B shows a preferred embodiment of a water desorption unit **W_{des}** <100> according to the invention, wherein the power unit **PU** <111> transfers heat to absorption medium **A_{VE}**** <109**> via a metal surface <103>.
Figure 2 A shows a preferred embodiment of a water desorption unit **W_{des}** <100> in combination with a water absorption unit **W_{abs}** <200> according to the invention.
Figure 2 B shows a further preferred embodiment of a water desorption unit **W_{des}** <100> in combination with a water absorption unit **W_{abs}** <200> according to the invention.
Figure 3 shows a preferred embodiment of a cooling component **WIC** <400> according to the invention.
Figure 4 shows a preferred embodiment according to the invention, namely a combination of two water desorption units **W_{des}** <100A>, <100B>, a water absorption unit **W_{abs}** <200>, and a cooling component **WIC** <400>. In water desorption units **W_{des}** <100A>, a motor **M** <303> is immerged. In water desorption units **W_{des}** <100B>, a battery **B** <305> is immerged.

### 4. Detailed Description of the Invention

### 4.1 Vehicle

The vehicle according to the first aspect of the invention can be any vehicle, which comprises a power unit and an absorption unit, where there is a need to use waste energy from the power unit to drive water absorption.

In a preferred embodiment, the vehicle according to the invention is selected from the group consisting of car, motorbike, plane, helicopter, ship, train, tram. Preferably, the vehicle according to the present invention is a car.

### 4.1.1 Liquid absorption medium A_{VE}

The vehicle according to the first aspect of the invention comprises a liquid absorption medium **A_{VE}. A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion.

**S** is preferably selected from the group consisting of Q⁺A⁻, Q⁺(R¹O)₂PO₂⁻. Most preferably, **S** is Q⁺(R¹O)₂PO₂⁻.

The halogenide is selected from the group consisting of F⁻, Cl⁻, Br⁻, I⁻, preferably from the group consisting of F , Cl⁻, Br⁻, more preferably from the group consisting of Cl⁻, Br⁻. Most preferably, the halogenide is Cl⁻.

The alkali metal ion is preferably selected from the group consisting of Li+, K+, Na+, more preferably K+, Na+, most preferably Na+.

Q⁺ is a dialkylimidazolium cation, in which in particular the alkyl groups each independently have 1 to 10, preferably 1 to 8, more preferably 1 to 6, still more preferably 1 to 4, even more preferably 1 to 2 carbon atoms. Preferably, Q⁺ is selected from the group consisting of 1,3-dimethylimidazolium, 1,3-diethylimidazolium, 1-ethyl-3-methylimidazolium, 1-butyl-3-methylimidazolium. More preferably, Q⁺ is selected from the group consisting of 1,3-dimethylimidazolium, 1-ethyl-3-methylimidazolium. Most preferably, Q⁺ is 1-ethyl-3-methylimidazolium.

A is preferably selected from the group consisting of halogenide, R*COO⁻, R'SO₃⁻. More preferably, A is selected from the group consisting of acetate, proprionate, chloride, methyl sulphonate.

R*, R', R" are each independently of one another an alkyl group, in particular with 1 to 10, preferably 1 to 8, more preferably 1 to 6, still more preferably 1 to 4, even more preferably 1 to 3, most preferably 1 to 2 carbon atoms, most preferably 1 carbon atom.

R¹, R², R³ are each independently of one another an alkyl group, in particular with 1 to 10, preferably 1 to 8, more preferably 1 to 6, still more preferably 1 to 4, even more preferably 1 to 2 carbon atoms, most preferably 2 carbon atoms.

In a preferred embodiment of the first aspect of the invention, **S** is selected from the group consisting of Q⁺A⁻, Q⁺(R¹O)₂PO₂⁻, wherein preferably Q⁺ is selected from the group consisting of 1,3-dimethylimidazolium, 1,3-diethylimidazolium, 1-ethyl-3-methylimidazolium, A is selected from the group consisting of Cl⁻, acetate, proprionate, methyl sulphonate, and R¹ is an alkyl group with 1 to 10, preferably 1 to 8, more preferably 1 to 6, still more preferably 1 to 4, even more preferably 1 to 2 carbon atoms, most preferably 2 carbon atoms.

Even more preferably, **S** is selected from the group comprising 1,3-dimethylimidazolium chloride, 1-ethyl-3-methylimidazolium chloride, 1,3-dimethylimidazolium acetate, 1,3-dimethylimidazolium propionate, 1,3-dimethylimidazolium methyl sulphonate, 1,3-dimethylimidazolium monoethylphosphate, 1,3-dimethylimidazolium diethylphosphate, 1-ethyl-3-methylimidazolium diethylphosphate, 1-butyl-3-methylimidazolium dibutylphosphate, even more preferably selected from the group comprising 1,3-dimethylimidazolium acetate, 1,3-dimethylimidazolium propionate, 1,3-dimethylimidazolium methyl sulphonate, 1,3-dimethylimidazolium diethylphosphate, 1-ethyl-3-methylimidazolium diethylphosphate, 1-butyl-3-methylimidazolium dibutylphosphate.

In another preferred embodiment of the first aspect of the invention, **S** is Q⁺(R¹O)₂PO₂⁻, wherein preferably Q⁺ is selected from the group consisting of 1,3-dimethylimidazolium, 1,3-diethylimidazolium, 1-ethyl-3-methylimidazolium, 1-butyl-3-methylimidazolium, more preferably selected from the group consisting of 1,3-dimethylimidazolium, 1-ethyl-3-methylimidazolium, 1-butyl-3-methylimidazolium, more preferably selected from the group consisting of 1,3-dimethylimidazolium, 1-ethyl-3-methylimidazolium, most preferably 1-ethyl-3-methylimidazolium,
and R¹ is an alkyl group with 1 to 10, preferably 1 to 8, more preferably 1 to 6, still more preferably 1 to 4, even more preferably 1 to 2 carbon atoms, most preferably 2 carbon atoms.

**S** is most preferably 1-ethyl-3-methylimidazolium diethylphosphate.

The liquid absorption medium **A_{VE}** may be employed in the form of the pure salts of the structure Q⁺A⁻, Q⁺(R¹O)₂PO₂⁻, (Q⁺)₂R²OPO₃²⁻, Q⁺M⁺R³OPO₃²⁻. Alternatively and preferably, the liquid absorption medium **A_{VE}** is an aqueous solution in which the total weight of all salts of structure Q⁺A⁻, Q⁺(R¹O)₂PO₂⁻, (Q⁺)₂R²OPO₃²⁻, Q⁺M⁺R³OPO₃²⁻ is at least 65 weight-%, based on the total weight of the aqueous solution. It is more preferable when in the liquid absorption medium **A_{VE},** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 99 weight-%, based on the total weight of the aqueous solution. It is even more preferable when in the liquid absorption medium **A_{VE},** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 90 weight-%, based on the total weight of the aqueous solution. It is most preferable when in the liquid absorption medium **A_{VE},** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 80 weight-%, preferably 70 to 80 weight-%, based on the total weight of the aqueous solution.

### 4.1.2 Water Absorption Unit W_{abs}

**WAC** comprises at least one water absorption unit **W_{abs},** which optionally comprises a heat exchanger.

The water absorption unit **W_{abs}** is set up for contacting a moist gas **G,** preferably water vapour, with the liquid absorption medium **A_{VE}** to obtain an aqueous liquid absorption medium **A_{VE}*** with an elevated water content compared to **A_{VE}** and a gas **G*** with a reduced water content compared to moist gas **G.**

**A_{VE}*** corresponds to **A_{VE}** and has an elevated water content compared to **A_{VE},** which is the reason why **A_{VE}*** is "aqueous". Of note, the fact that **A_{VE}*** is "aqueous" does not mean that **A_{VE}** cannot contain water. In some embodiments of the invention, **A_{VE}** is also "aqueous".

The water content of **A_{VE}*** is preferably at least 1 weight-% higher than that of **A_{VE}**, more preferably at least 2 weight-% higher than that of **A_{VE}**, more preferably at least 3 weight-% higher than that of **A_{VE}**, more preferably at least 4 weight-% higher than that of **A_{VE}**, more preferably at least 5 weight-% higher than that of **A_{VE},** more preferably at least 6 weight-% higher than that of **A_{VE},** more preferably at least 7 weight-% higher than that of **A_{VE}**, more preferably at least 8 weight-% higher than that of **A_{VE},** more preferably at least 9 weight-% higher than that of **A_{VE}**, more preferably at least 10 weight-% higher than that of **A_{VE}**.

These preferred embodiments also include the further preferable case in which the water content of **A_{VE}*** is in the range of 1 to 10 weight-% higher than that of **A_{VE},** and likewise include the two preferred cases in which the water content of **A_{VE}*** is in the range of 1 to 5 weight-% higher than that of **A_{VE}** or in which the water content of **A_{VE}*** is in the range of 2 to 10 weight-% higher than that of **A_{VE}.**

"Absorbing water" is to be understood as meaning in the context of the invention "at least partially absorbing water".

"At least partially" is to be understood as meaning in the context of the invention "partially or completely".

"Moist" is to be understood as meaning in the context of the invention "comprising water, in particular water vapour".

"Moist gas **G"** is accordingly to be understood as meaning in the context of the invention that the gas **G** comprises water, preferably water vapour ("water vapour" is to be understood as meaning water in the gaseous physical state), and that its composition is otherwise not subject to any particular restrictions. The water content of the moist gas **G** is not subject to any particular restrictions and is in particular from 0.01 vol% to 99.99 vol% ("vol%" indicates the volume of water vapour based on the overall volume of the moist gas mixture **G**). The composition of the moist gas **G** may otherwise vary depending on the application of the process according to the invention. The moist gas **G** is in particular selected from moist air (this may be moist indoor air or the moist air resulting from evaporation of water in absorption chillers). For moist air, the water content is in particular from 0.01 weight-% to 15.00 weight-% in the case of moist indoor air, or, in particular, from 95.00 weight-% to 99.99 weight-%, which is the preferred range when moist air resulting from evaporation of water in absorption chillers is concerned.

**G*** corresponds to **G** and has a reduced water content compared to the moist gas **G,** preferably reduced by at least 10 weight-%, more preferably reduced by at least 20 weight-%, more preferably reduced by at least 30 weight-%, more preferably reduced by at least 40 weight-%, more preferably reduced by at least 50 weight-%, more preferably reduced by at least 60 weight-%, more preferably reduced by at least 70 weight-%, more preferably reduced by at least 80 weight-%, more preferably reduced by at least 90 weight-%, more preferably reduced by at least 95 weight-%, more preferably reduced by at least 99 weight-%, compared to **G.**

Said absorbers are based on the principle of increasing the surface area of the liquid absorption medium **A_{VE}** and simultaneously achieving the longest possible residence time of the liquid absorption medium **A_{VE}** in the water absorber during absorption of water, for example those described in G. Vicatos, J. Gryzagoridis, S. Wang, Journal of Energy in Southern Africa 2008, 19 (4), 6-11 and A. Khan, H. M. Ali, S. Khushnood, S. S. Shah, M. Nouman Ali, Technical Journal, University of Engineering and Technology (UET) Taxila, Pakistan 2018, 23 (2), 24-34. It is in particular possible here to employ water absorbers selected from the group of: packed beds, spray columns, falling-films, bubble columns, tray columns, wet scrubbers (for example Venturi scrubbers), stirred tanks and combinations of these absorbers. It is particularly preferable to employ falling-films, in particular shell and fin-tube falling-films, as water absorbers.

The water absorption unit **W_{abs}** optionally further comprises a heat exchanger which preferably is set up such that the liquid absorption medium **A_{VE}** is coolable. Employable water absorption units **W_{abs}** of this kind include in particular the water absorbers known to those skilled in the art.

### 4.1.3 Water Desorption Unit W_{des}

**WAC** comprises at least one water desorption unit **W_{des}** which optionally comprises a heat exchanger.

The water desorption unit **W_{des}** represents the gist of the present invention. It is set up
- to at least partially desorb water from liquid absorption medium **A_{VE}*** by transferring heat from the at least one power unit **PU** to liquid absorption medium **A_{VE}*,** to obtain water vapour **V_{H2O}** and liquid absorption medium **A_{VE}**** with a reduced water content compared to the liquid absorption medium **A_{VE}*,**
- and to conduct at least a part of liquid absorption medium **A_{VE}**** as liquid absorption medium **A_{VE}** from the water desorption unit **W_{des}** to the water absorption unit **W_{abs}.**

**A_{VE}**** corresponds to **A_{VE}*** and is characterized in that it has a reduced water content as compared to **A_{VE}***. The water content of **A_{VE}**** depends on the conditions set up in step (b) of the process according to the second aspect of the invention (described *infra*)*.*

In a preferred embodiment of the vehicle according to the first aspect of the invention, it is set up so that the at least one power unit **PU** is at least partially immersed in the liquid absorption medium **A_{VE}****, so that the outer walls of **PU** contact **A_{VE}****, and heat is transferred from **PU** to **A_{VE}****. Alternatively, **PU** can also share a wall or the casing with the a water desorption unit **W_{des},** so that via this, waste heat from **PU** can be transferred to **A_{VE}*** or **A_{VE}****.

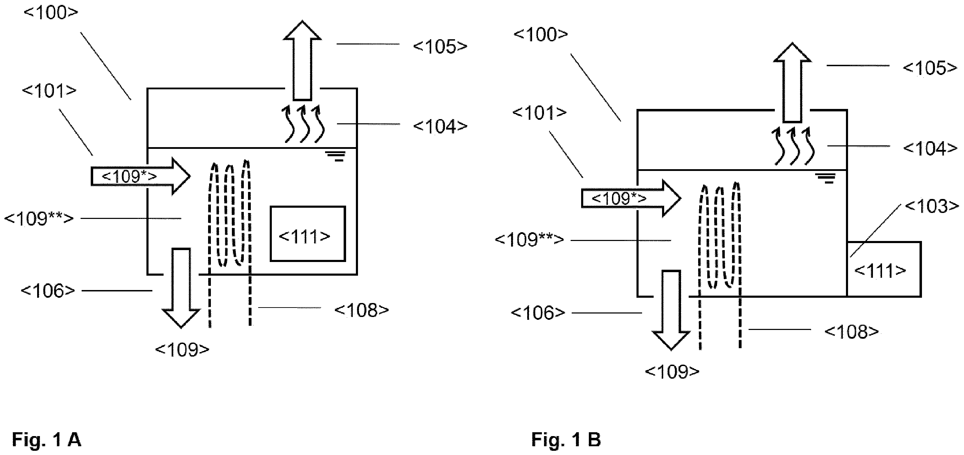

A typical embodiment of a water desorption unit **W_{des}** <100> is shown in Figure 1 A.

The setup of the water desorption unit **W_{des}** <100> is based on the principle of supplying waste heat from power unit **PU** <111> to a liquid absorption medium **A_{VE}*** <109*> or **A_{VE}**** <109**>, which are both laden with water.

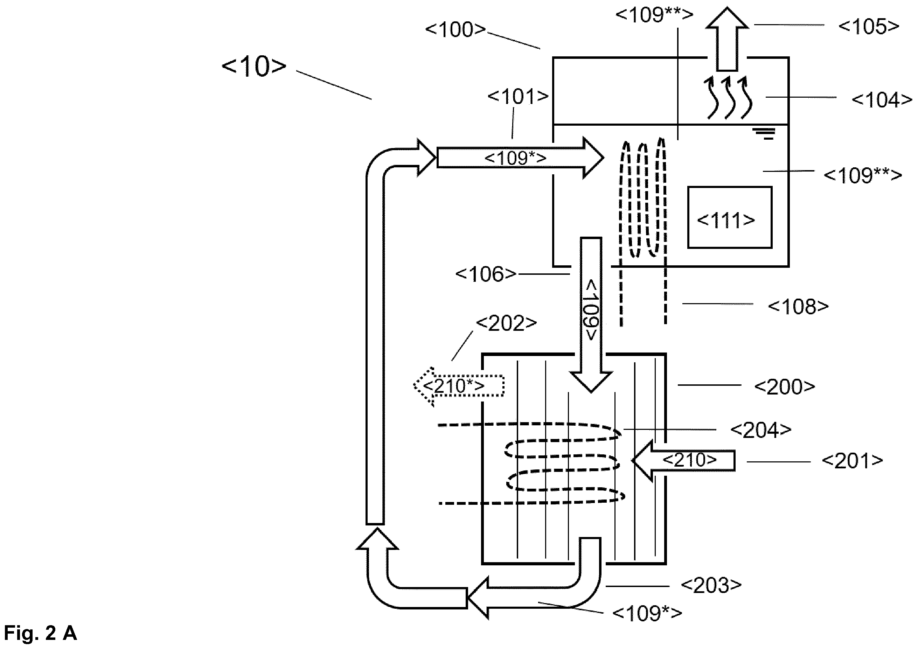

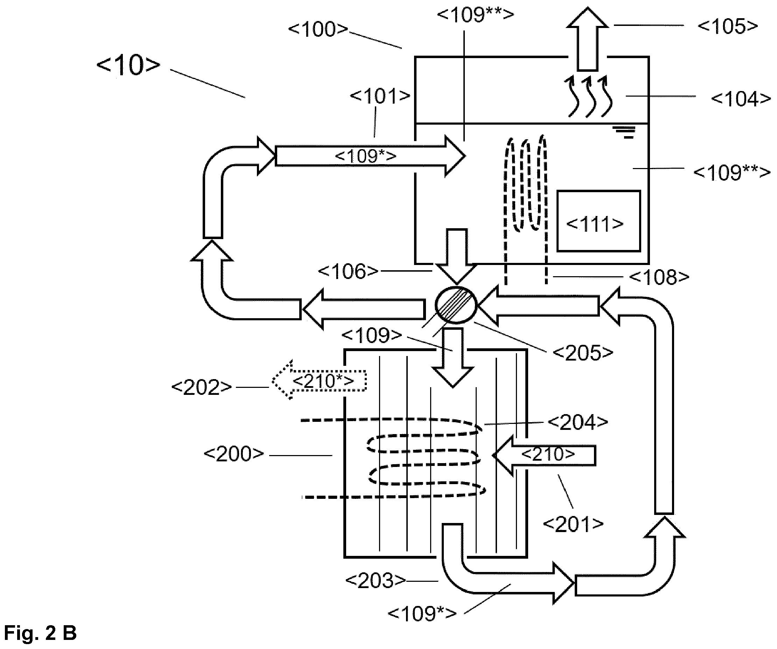

"**A_{VE}**", "**A_{VE}***", and "**A_{VE}****" is used hereinafter to discern a liquid absorption media which comprise the same components, except that they have different water contents and are located at different parts of the vehicle. Liquid absorption medium **A_{VE}** <109> is the liquid absorption medium which is conducted to the water absorption unit <200> (shown in Figure 2). There, liquid absorption medium **A_{VE}** <109> absorbs water from moist gas **G** <210> and gives liquid absorption medium **A_{VE}*** <109*> with elevated water content compared to the liquid absorption medium **A_{VE}** <109>. **A_{VE}*** <109*> is then conducted to the water desorption unit **W_{des}** <100>, where water vapour **V_{H2O}** <104> is desorbed by using waste heat from power unit <111>, giving a liquid absorption medium **A_{VE}**** <109**> with reduced water content as compared to **A_{VE}*** <109*>. In other words, as soon as water vapour **V_{H2O}** <104> is desorbed from **A_{VE}*** <109*>, **A_{VE}*** <109*> is described as **A_{VE}**** <109**>.

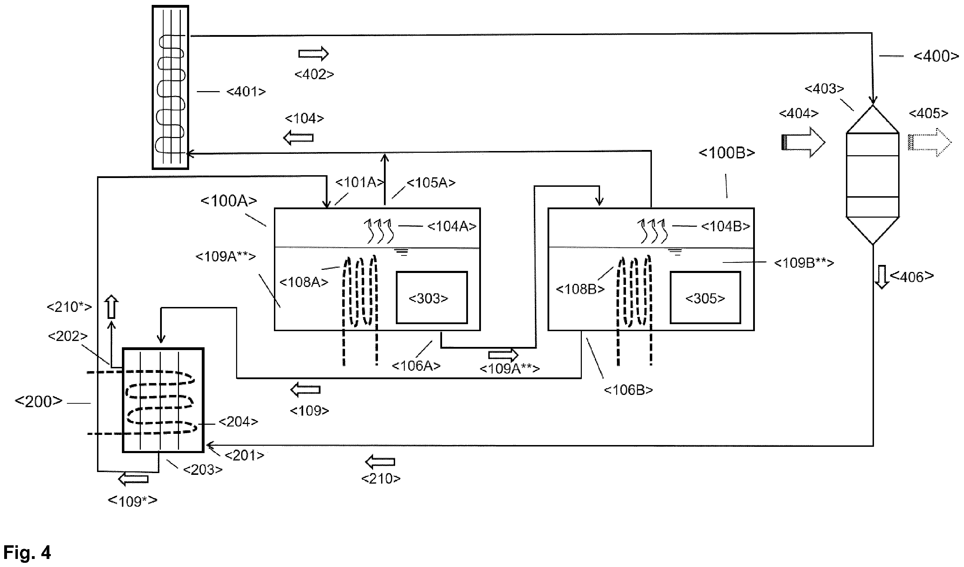

The water desorption unit **W_{des}** <100> comprises a conduit <101> to feed liquid absorption medium **A_{VE}*** <109*> into the interior of the water desorption unit **W_{des}** <100>. **A_{VE}*** <109*> is laden with heat to obtain **A_{VE}**** <109**> and water vapour **V_{H2O}** <104> by contacting a power unit **PU** <111> such as a motor **M** <303> or a battery **B** <305> (shown in Figure 4). This contacting can be achieved by at least partly immersing power unit **PU** <111> in liquid absorption medium **A_{VE}**** <109*>, or, as shown in Figure 1 A, fully immersing it in **A_{VE}**** <109*>.

Alternatively, as shown in Figure 1 B, water desorption unit **W_{des}** <100> can be set up to share only a wall with power unit **PU** <111>, through which waste heat from **PU** <111> can be transferred to liquid absorption medium **A_{VE}*** <109*> so to obtain water vapour **V_{H2O}** <104> and a liquid absorption medium **A_{VE}**** <109**>.

Optionally, the desorbing of water vapour **V_{H2O}** <104> from the liquid absorption medium **A_{VE}*** <109*> can be supported by a heat exchanger <108>. Optionally, the desorbing of water vapour **V_{H2O}** <104> from the liquid absorption medium **A_{VE}*** <109*> can be supported by a means to reduce the pressure, such as a vacuum pump that reduces the pressure in the inside of the water desorption unit **W_{des}** <100> (not shown in the Figures).

To this aim, the power unit **PU** <111> preferably comprises a metal surface, via which heat transfer between power unit **PU** <111> and liquid absorption medium **A_{VE}*** <109*> (or, once desorbing of water vapour **V_{H2O}** <104> has started, liquid absorption medium **A_{VE}**** <109**>) can take place, wherein the metal is preferably selected from noble metal, aluminium, steel, copper, nickel, zinc, tin or alloys from any of them. Noble metals are preferably selected from silver, gold, platinum. Steal is preferably selected from carbon steel, stainless steel.

The metal is even more preferably selected from aluminium, copper, steel.

As the water vapour **V_{H2O}** <104> is desorbed from liquid absorption medium **A_{VE}*** <109*>, the relative amount of water in the obtained liquid absorption medium **A_{VE}**** <109**> is less than in liquid absorption medium **A_{VE}*** <109*>. Preferably, as heat is used to desorb water vapour **V_{H2O}** <104> from liquid absorption medium **A_{VE}*** <109*>, the relative amount of heat in obtained liquid absorption medium **A_{VE}**** <109**> is less than in liquid absorption medium **A_{VE}*** <109*>.

"Wherein the relative amount of water in the obtained liquid absorption medium **A_{VE}**** <109**> is less than in liquid absorption medium **A_{VE}*** <109*>." means that the water content in a given amount of **A_{VE}****, is less than the water content in the same amount **A_{VE}***.

"Wherein the relative amount of heat in the obtained liquid absorption medium **A_{VE}**** <109**> is less than in liquid absorption medium **A_{VE}*** <109*>." means that the heat content in a given amount of **A_{VE}****, is less than the water content in the same amount **A_{VE}***.

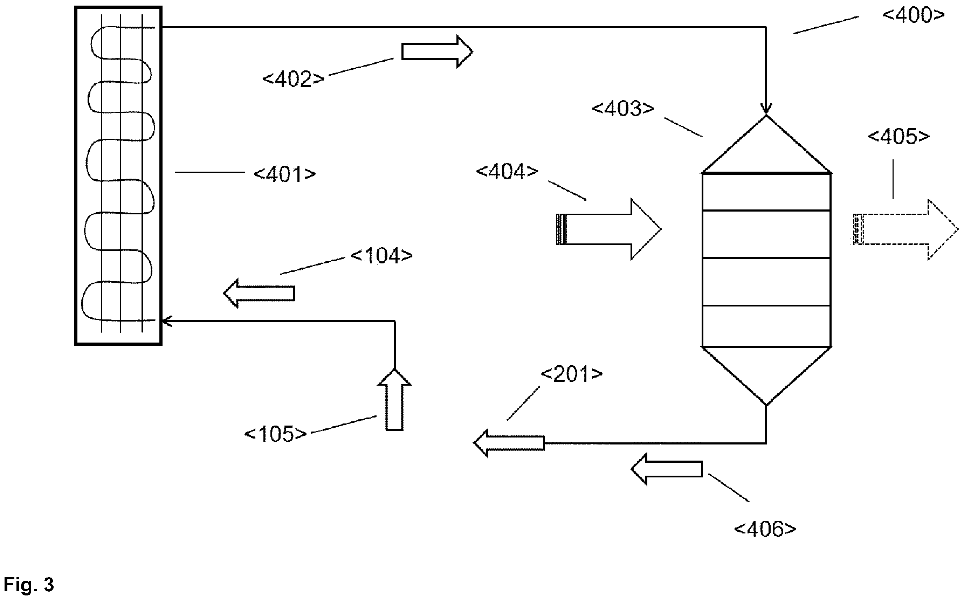

The water desorption unit **W_{des}** <100> comprises a further conduit <105> by which water vapour **V_{H2O}** <104> can be led off, for example to a water condenser <401> as shown in Figure 3.

The gist of the invention is now reflected in that the water desorption unit **W_{des}** <100> is set up to transfer heat from power unit **PU** <111>, onto liquid absorption medium **A_{VE}*** <109*>, obtained by contacting of liquid absorption medium **A_{VE}** <109> and gas G in the water absorption unit **W_{abs}** <200>. This ensures optimal transfer of the heat generated by power unit **PU** <111> onto the liquid absorption medium **A_{VE}*** <109*>, so that a maximum amount of heat can be used to desorb water from liquid absorption medium **A_{VE}*** <109*>. To this aim, water desorption unit **W_{des}** <100> can be set up to have power unit **PU** <111> integrated into for example one casing, so that liquid absorption medium **A_{VE}*** <109*> at least partially immerses ("bathes") power unit **PU** <111>. Such an embodiment is shown in Figure 1 A. Alternatively, water desorption unit **W_{des}** <100> can be set up to share a surface, preferably a metal surface, with power unit **PU** <111>, an embodiment shown in Figure 1 B.

Water desorption unit **W_{des}** <100> is further set up to conduct liquid absorption medium **A_{VE}**** <109**>, which remains after desorption of water vapour **V_{H2O}** <104> from liquid absorption medium **A_{VE}*** <109*>, via conduit <106>. Conduit <106> is set up to conduct liquid absorption medium **A_{VE}**** <109**> to a water absorption unit **W_{abs}** <200> (shown in Figure 2). Liquid absorption medium **A_{VE}**** <109**>, which is conducted via conduit <106>, is denoted as "**A_{VE}**" <109> for the sake of simplicity. The interior of the water desorption unit **W_{des}** <100> preferably contains further elements that favour water desorption from liquid absorption medium **A_{VE}*** <109*>. For this purpose, any element that increases the surface area of liquid absorption medium **A_{VE}*** <109*> and simultaneously achieves the longest possible residence time of the liquid absorption medium **A_{VE}*** <109*> in the water desorption unit **W_{des}** <100> can be used.

Employable water desorption units **W_{des}** <100> optionally comprise a heat exchanger <108>, which either contacts liquid absorption medium **A_{VE}*** <109*> and liquid absorption medium **A_{VE}**** <109**> or not. It is preferable that the heat exchanger <108> contacts liquid absorption medium **A_{VE}**** <109**> and liquid absorption medium **A_{VE}*** <109*>, because then it supplies heat directly to liquid absorption medium **A_{VE}*** <109*> and liquid absorption medium **A_{VE}**** <109**>. Otherwise, the heat exchanger <108> can be set up to contact vapour **V_{H2O}** <104>, which facilitates to drive out vapour **V_{H2O}** <104> through conduit <105>. Likewise, in an optional embodiment of the present invention, a vacuum pump can be set up to reduce the pressure in the water desorption unit **W_{des}** <100> in order to facilitate desorbing water vapour **V_{H2O}** <104> from liquid absorption medium **A_{VE}*** <109*>.

The heat exchanger <108> can, alternatively, also be used, in particular at the end of the desorption, to cool the liquid absorption medium **A_{VE}**** <109**>, so that the absorption efficiency of liquid absorption medium **A_{VE}**** <109**> is improved when it is used again as absorbent **A_{VE}** <109>.

Such arrangement includes in particular the combinations of heat exchanger and water desorber known to those skilled in the art, in particular horizontal tube evaporators having an upstream heat exchanger, in particular shell and tube heat exchangers, plate and frame heat exchangers. In addition, the water desorption unit **W_{des}** optionally comprising a heat exchanger may also be a water desorber having an integrated heat exchanger. Such water desorbers having an integrated heat exchanger are in particular climbing film evaporators, long tube vertical evaporators, short tube vertical evaporators, forced circulation evaporators, agitated thin film evaporators. It is particularly preferable to employ as water desorption unit **W_{des}** falling-films, in particular shell and tube falling-films.

### 4.1.4 Circuit U_{WAC}

The vehicle according to the first aspect of the invention comprises a circuit **U_{WAC}** which connects the at least one water absorption unit **W_{abs}** with the at least one water desorption unit **W_{des},** and by means of which the absorption media **A_{VE}** and **A_{VE}*** may be circulated between the water absorption unit **W_{abs}** and the water desorption unit **W_{des}**. In particular, this means that the liquid absorption medium **A_{VE}** can be conducted from water desorption unit **W_{des}** to the water absorption unit **W_{abs}** and the liquid absorption medium **A_{VE}*** can be conducted from water absorption unit **W_{abs}** to the water desorption unit **W_{des}**. The circuit **U_{WAC}** is preferably a conduit, more preferably selected from the group consisting of tube, hose. In a further preferred embodiment, the circuit **U_{WAC}** also comprises a pump.

In a preferred embodiment of a water desorption unit **W_{des}** <100> as shown in Figure 1 A or Figure 1 B, the connection from water desorption unit **W_{des}** <100> to the water absorption unit **W_{abs}** <200> (shown in Figures 2 A and 2 B) starts from conduit <106>. Via this conduit <106>, liquid absorption medium **A_{VE}**** <109**> can be conducted as **A_{VE}** <109> to the water absorption unit **W_{abs}** <200> where it absorbs further water from the moist gas **G** <210>, so to obtain **A_{VE}*** <109*> and gas **G*** <210*>. **A_{VE}*** <109*> is then conducted from the water absorption unit **W_{abs}** <200> to water desorption unit **W_{des}** <100> via conducts <203> and <101>.

Figure 2 A shows a first preferred embodiment of the water absorption unit component **WAC** <10> according to the first aspect of the invention. In this embodiment, the waste heat from the power unit **PU** <111> is used to regenerate an absorbent which absorbs water from a moist gas **G** <210>, wherein the moist gas **G** <210> is not further limited, to give dehumidified gas **G*** <210*>. For example, moist gas **G** <210> can be moist air from the outside of the vehicle. Dehumidified air **G*** <210*> can then be supplied into the interior of the vehicle.

Figure 2 A depicts a water desorption unit **W_{des}** <100> as shown by Figure 1 A. In addition, Figure 2 A also depicts a water absorption unit **W_{abs}** <200>. Water absorption unit **W_{abs}** <200> comprises a conduit <106> which is set up to conduct liquid absorption medium **A_{VE}**** <109**>, which was obtained as explained with respect to Figure 1, to the interior of water absorption unit **W_{abs}** <200>. Liquid absorption medium **A_{VE}**** <109**> conducted via conduit <106> to the water absorption unit **W_{abs}** <200> is referred to as "liquid absorption medium **A_{VE}**" <109>. Water absorption unit **W_{abs}** <200> is further set up so that liquid absorption medium **A_{VE}** <109> can be contacted with a moist gas **G** <210>. Water absorption unit **W_{abs}** <200> is further set up so that moist gas **G** <210> can enter it via conduit <201> and so that the liquid absorption medium **A_{VE}** <109> can absorb water from moist gas **G** <210>. Such absorption leaves a gas **G*** <210*>, which has a reduced water content compared to moist gas **G,** and liquid absorption medium **A_{VE}*** <109*> with an elevated water content compared to the liquid absorption medium **A_{VE}** <109>. Water absorption unit **W_{abs}** <200> is set up so that gas **G*** <210*> can be conducted out of the interior of water absorption unit **W_{abs}** <200>, for example by a conduit <202>. Water absorption unit **W_{abs}** <200> optionally contains a heat exchanger <204> which can be set up to cool liquid absorption medium **A_{VE}** <109> so that the absorption of moisture from moist gas **G** <210> into liquid absorption medium **A_{VE}** <109> is favoured. Water absorption unit **W_{abs}** <200> further contains a conduit <203> which is set up to conduct liquid absorption medium **A_{VE}*** <109*> to water desorption unit **W_{des}** <100>. Water desorption unit **W_{des}** <100> comprises a conduit <101> to feed liquid absorption medium **A_{VE}*** <109*> into the interior of the water desorption unit **W_{des}** <100> as described with respect to Figure 1.

Figure 2 B depicts the same embodiment as Figure 2 A, except that it further contains a heat exchanger <205>. This embodiment is more efficient, because heat exchanger <205> allows to exchange heat between liquid absorption medium **A_{VE}*** <109*> which is conducted from water absorption unit **W_{abs}** <200> via conduit <203> to the water desorption unit **W_{des}** <100> and liquid absorption medium **A_{VE}** <109> which is conducted from water desorption unit **W_{des}** <100> via conduit <106> to the water absorption unit **W_{abs}** <200>.

### 4.1.5 Power Unit PU

The vehicle according to the first aspect of the invention comprises at least one power unit **PU.**

The power unit **PU** can be any means by which the vehicle can be powered and by which waste heat is generated. It is preferably selected from the group consisting of a motor **M,** battery **B.** The power unit **PU** can also be a hybrid technology engine, thus comprising at least one battery **B** and at least one motor **M.**

**PU** is set up to transfer heat from the **PU** onto the absorption media **A_{VE}*** and **A_{VE}****. Such setup is known to the skilled person. For example, the heat can be transferred from the **PU** onto **A_{VE}*** and **A_{VE}**** by directly contacting the outer surface of **PU** with **A_{VE}*** and **A_{VE}****. For example, such setup is depicted in WO 2010/088978 A1 or in P. Sharma, M. Parwal, E. Ayyar, SAE Technical Paper 2018-28-0013, 2018 (DOI: 10.4271/2018-28-0013).

Alternatively, in case of a power unit running on petrol, diesel, or another fossil combustible material, for example fuel oil, the heat from the motor can also be transferred onto **A_{VE}** by contacting **A_{VE}** with the exhaust fumes of the motor. For example, such use of the heat from the exhaust fumes is depicted in US 2006/0130469 A1.

### 4.1.6 Preferred Embodiment

In a further preferred embodiment, the vehicle further comprises at least one cooling component **WIC** for cooling air from inside the vehicle or for cooling a component **O_{B}** of the vehicle, wherein **O_{B}** is different from the power unit **PU.** It goes without saying that **WIC** can also be used for cooling both air from inside the vehicle and a component **O_{B}**. **WIC** is preferably an absorption refrigeration machine.

### 4.1.6.1 Refrigerant

**WIC** comprises water as a refrigerant. The use of water as refrigerant further reflects the gist of the invention in that the water in the form of moist gas **G** is absorbed into the liquid absorption medium **A_{VE}** in the water absorption unit **W_{abs}** and then conducted as part of liquid absorption medium **A_{VE}*** to the water desorption unit **W_{des}**. The water desorption unit **W_{des}** is set up so that this water is at least partly stripped from the mixture of liquid absorption medium **A_{VE}*,** giving water vapour **V_{H2O}** and liquid absorption medium **A_{VE}****. Then water vapour **V_{H2O}** is conducted to a water condenser **W_{Con}**.

### 4.1.6.2 Water Condenser W_{Con}

**WIC** further comprises at least one water condenser **W_{Con}** set up for at least partially condensing water vapour **V_{H2O}** into liquid water **L_{H2O}**. Such water condensers are known to the skilled person, and are for example described by M. Seiler, A. Kühn, F. Ziegler, X. Wang, Sustainable Cooling Strategies Using New Chemical System Solutions, Ind. Eng. Chem. Res. 2013, 52, 16519-16546 (hereinafter "Seiler *et al*."). The water condenser **W_{Con}** is set up to at least partially condense water vapour **V_{H2O}**, so to obtain liquid water **L_{H2O}**.

### 4.1.6.3 Water Evaporator W_{Ev}

**WIC** further comprises at least one water evaporator **W_{Ev}**, set up for at least partially evaporating water, so to obtain water vapour **V_{H2O}***. These water evaporators are known to the skilled person, and are for example described in Seiler *et al.*

The water evaporator **W_{Ev}** in particular comprises a surface, which is preferably made from metal, wherein the metal is more preferably selected from a noble metal, aluminium, steel, copper, nickel, zinc, tin or alloys from any of them. Noble metals are preferably selected from silver, gold, platinum. Steal is preferably selected from carbon steel, stainless steel.

The metal is even more preferably selected from aluminium, copper, steel.

The surface preferably contacts air from inside the vehicle or a it contacts a component **O_{B}** of the vehicle, wherein **O_{B}** is different from the power unit **PU,** so that heat from the air or **O_{B}** can be transferred to water inside the water evaporator **W_{Ev}** to at least partially evaporate water to obtain water vapour **V_{H2O}***,

This water evaporator **W_{Ev}** represents the cooling component of the absorption refrigeration cycle.

This water evaporator **W_{Ev}**, in an optional embodiment of the present invention, can comprise a vacuum pump set up to reduce the pressure in the water evaporator **W_{Ev}** in order to facilitate evaporation of liquid water **L_{H2O}** to give water vapour **V_{H2O}***.

**O_{B}** is different from the power unit **PU,** and preferably **O_{B}** is a component in the passenger area of the vehicle, such as a computer server or furnishings within the vehicle.

"Air from inside the vehicle" preferably refers to air from the passenger area of the vehicle.

"Passenger area" refers to areas where passengers usually are located during the operation of the vehicle. It also refers to the area where ridership, drivers, conductors, pilots, captains are seated during operation of the vehicle.

### 4.1.6.4 Conduit U_{WIC}

**WIC** further comprises a conduit **U_{WIC}** which connects the at least one water desorption unit **W_{des}** with the at least one water condenser **W_{Con},** the at least one water condenser **W_{Con}** with the at least one water evaporator **W_{Ev}**, and the at least one water evaporator **W_{Ev}** with the at least one water absorption unit **W_{abs},** and by means of which water vapour **V_{H2O}** may be conducted from the at least one water desorption unit **W_{des}** to the at least one water condenser **W_{Con},** and by means of which liquid water **L_{H2O}** may be conducted from the at least one water condenser **W_{Con}** to the at least one water evaporator **W_{Ev}**, and by means of which water vapour **V_{H2O}*** may be conducted from the at least one water evaporator **W_{Ev}** as moist gas **G** to the at least one water absorption unit **W_{abs}.**

Figure 3 shows a further preferred embodiment of the vehicle according to the first aspect of the invention. In this embodiment, a preferred embodiment of the cooling component **WIC** <400> is shown. In this embodiment, water vapour **V_{H2O}** <104> is conducted from the water desorption unit **W_{des}** <100> (shown in Figures 1 A, 1 B, 2 A, and 2 B) via conduit <105> to a water condenser **W_{Con}** <401> which is set up to condense water vapour **V_{H2O}** <104> into liquid water **L_{H2O}** <402>. Liquid water **L_{H2O}** <402> is then conducted to water evaporator **W_{Ev}**, <403> set up for evaporating water, so to obtain water vapour **V_{H2O}*** <406>. The water evaporator **W_{Ev}** <403> comprises a surface, which is preferably made from metal. The surface contacts air from inside the vehicle <404> and is set up to transfer the heat from air <404> to the liquid water **L_{H2O}** <402> to evaporate liquid water **L_{H2O}** <402> to obtain water vapour **V_{H2O}*** <406> and air <405> with reduced temperature.

The surface can also contact an object **O_{B}** different from the power unit **PU,** for example from inside the passenger area of the vehicle and is set up to transfer the heat from **O_{B}** to the liquid water **L_{H2O}** <402> to evaporate liquid water **L_{H2O}** <402> to obtain water vapour **V_{H2O}*** <406>.

Water vapour **V_{H2O}*** <406> is then conducted to the water absorption unit **W_{abs}** <200> (shown in Figures 2 A and 2 B) as moist gas **G** <210> and can enter water absorption unit **W_{abs}** <200> through conduit <201>.

In such an embodiment, moisture from moist gas **G** <210> is constantly absorbed into absorbent **A_{VE}** <109>, so that a separate conduct <202> is not necessary.

Figure 4 shows a further embodiment of a vehicle according to the first aspect of the invention. It comprises two water desorption units **W_{des}** <100A>, <100B>, wherein each of the two has a structure as explained under item 4.1.3 and Figure 1 A in combination with a water absorption unit **W_{abs}** <200> as explained under item 4.1.2 and Figure 2 A, a power unit component **PUC,** which is a motor **M** <303> in power unit **PU** <100A> and a battery **B** <305> in power unit **PU** <100B> as explained under item 4.1.5. The reference numerals given in Figure 4 correspond to those explained in the above Figures and the respective passage. Those parts belonging to water desorption unit **W_{des}** <100A> contain the letter "A", those parts belonging to water desorption unit **W_{des}** <100B> contain the letter "B". The embodiment shown in Figure 4 is particularly advantageous, because it allows to desorb water vapour **V_{H2O}** <104A>, <104B> particularly well, as absorption media **A_{VE}**** <109A**>, <109B**> are conducted against the heat gradient.

### 4.2 Process

The process according to the second aspect of the present invention is one for combined cooling of a power unit **PU,** and absorbing water from a moist gas **G** in a vehicle, comprising the following steps:
(a) contacting a moist gas **G** with a liquid absorption medium **A_{VE},** to obtain a liquid absorption medium **A_{VE}*** with an elevated water content compared to the liquid absorption medium **A_{VE},** and a gas **G*** with a reduced water content compared to the moist gas **G,**
(b) at least partially desorbing water from liquid absorption medium **A_{VE}*** by transferring heat from power unit **PU** to liquid absorption medium **A_{VE}*,** to obtain water vapour **V_{H2O}** and liquid absorption medium **A_{VE}**** with a reduced water content compared to the liquid absorption medium **A_{VE}*,** wherein the liquid absorption medium **A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion.

A vehicle according to the invention is preferably selected from the group consisting of car, motorbike, plane, helicopter, ship, train, tram. Preferably, the vehicle according to the present invention is a car.

### 4.2.1 Step (a): Water Absorption

Step (a) of the process according to the second aspect of the invention comprises contacting a moist gas **G** with a liquid absorption medium **A_{VE}.** In step (a), the liquid absorption medium **A_{VE}** absorbs water from the moist gas **G,** and a liquid absorption medium **A_{VE}*** with an elevated water content compared to the liquid absorption medium **A_{VE},** and a gas **G*** with a reduced water content compared to the moist gas **G** are obtained.

**A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion.

**S** is preferably selected from the group consisting of Q⁺A⁻, Q⁺(R¹O)₂PO₂⁻. Most preferably, **S** is Q⁺(R¹O)₂PO₂⁻.

The halogenide is selected from the group consisting of F⁻, Cl⁻, Br⁻, I⁻, preferably from the group consisting of F , Cl⁻, Br⁻, more preferably from the group consisting of Cl⁻, Br⁻. Most preferably, the halogenide is Cl⁻.

The alkali metal ion is preferably selected from the group consisting of Li+, K+, Na+, more preferably K+, Na+, most preferably Na+.

Q⁺ is a dialkylimidazolium cation, in which in particular the alkyl groups each independently have 1 to 10, preferably 1 to 8, more preferably 1 to 6, still more preferably 1 to 4, even more preferably 1 to 2 carbon atoms. Preferably dialkylimidazolium cations are selected from 1,3-dimethylimidazolium, 1,3-diethylimidazolium, 1-ethyl-3-methylimidazolium, 1-butyl-3-methylimidazolium, more preferably 1,3-dimethylimidazolium, 1-ethyl-3-methylimidazolium, most preferably 1-ethyl-3-methylimidazolium.

A is preferably selected from the group consisting of halogenide, R*COO⁻, R'SO₃⁻, more preferably A is selected from the group consisting of acetate, proprionate, chloride, methyl sulphonate.

R*, R', R" are each independently of one another an alkyl group, in particular with 1 to 10, preferably 1 to 8, more preferably 1 to 6, still more preferably 1 to 4, even more preferably 1 to 3, most preferably 1 to 2 carbon atoms, most preferably 1 carbon atom. R¹, R², R³ are each independently of one another an alkyl group, in particular with 1 to 10, preferably 1 to 8, more preferably 1 to 6, still more preferably 1 to 4, even more preferably 1 to 2 carbon atoms, most preferably 2 carbon atoms.

In a preferred embodiment of the first aspect of the invention, **S** is selected from the group consisting of Q⁺A⁻, Q⁺(R¹O)₂PO₂⁻, wherein preferably Q⁺ is selected from the group consisting of 1,3-dimethylimidazolium, 1,3-diethylimidazolium, 1-ethyl-3-methylimidazolium, A is selected from the group consisting of Cl⁻, acetate, proprionate, methyl sulphonate, and R¹ is an alkyl group with 1 to 10, preferably 1 to 8, more preferably 1 to 6, still more preferably 1 to 4, even more preferably 1 to 2 carbon atoms, most preferably 2 carbon atoms.

Even more preferably, **S** is selected from the group comprising 1,3-dimethylimidazolium chloride, 1-ethyl-3-methylimidazolium chloride, 1,3-dimethylimidazolium acetate, 1,3-dimethylimidazolium propionate, 1,3-dimethylimidazolium methyl sulphonate, 1,3-dimethylimidazolium monoethylphosphate, 1,3-dimethylimidazolium diethylphosphate, 1-ethyl-3-methylimidazolium diethylphosphate, 1-butyl-3-methylimidazolium dibutylphosphate, even more preferably selected from the group comprising 1,3-dimethylimidazolium acetate, 1,3-dimethylimidazolium propionate, 1,3-dimethylimidazolium methyl sulphonate, 1,3-dimethylimidazolium diethylphosphate, 1-ethyl-3-methylimidazolium diethylphosphate, 1-butyl-3-methylimidazolium dibutylphosphate,

In another preferred embodiment of the first aspect of the invention, **S** is Q⁺(R¹O)₂PO₂⁻, wherein preferably Q⁺ is selected from the group consisting of 1,3-dimethylimidazolium, 1,3-diethylimidazolium, 1-ethyl-3-methylimidazolium, 1-butyl-3-methylimidazolium, more preferably selected from the group consisting of 1,3-dimethylimidazolium, 1-ethyl-3-methylimidazolium, 1-butyl-3-methylimidazolium, more preferably selected from the group consisting of 1,3-dimethylimidazolium, 1-ethyl-3-methylimidazolium, most preferably 1-ethyl-3-methylimidazolium,
and R¹ is an alkyl group with 1 to 10, preferably 1 to 8, more preferably 1 to 6, still more preferably 1 to 4, even more preferably 1 to 2 carbon atoms, most preferably 2 carbon atoms.

**S** is most preferably 1-ethyl-3-methylimidazolium diethylphosphate.

The liquid absorption medium **A_{VE}** may be employed in step (a) in the form of the pure salts of the structure Q⁺A⁻, Q⁺(R¹O)₂PO₂⁻, (Q⁺)₂R²OPO₃²⁻, Q⁺M⁺R³OPO₃²⁻. Alternatively and preferably the liquid absorption medium **A_{VE}** in step (a) is an aqueous solution in which the total weight of all salts of structure Q⁺A⁻, Q⁺(R¹O)₂PO₂⁻, (Q⁺)₂R²OPO₃²⁻, Q⁺M⁺R³OPO₃²⁻ is at least 65 weight-% based on the total weight of the aqueous solution. It is more preferable when in the liquid absorption medium **A_{VE}** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 99 weight-% based on the total weight of the aqueous solution. It is even more preferable when in the liquid absorption medium **A_{VE}** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 90 weight-% based on the total weight of the aqueous solution. It is more preferable when in the liquid absorption medium **A_{VE}** the total weight of all salts of the structure Q⁺A⁻, Q⁺(R¹O)₂PO₂⁻, (Q⁺)₂R²OPO₃²⁻, Q⁺M⁺R³OPO₃²⁻ is in the range of 65 to 80 weight-%, preferably, 70 to 80 weight-% based on the total weight of the aqueous solution.

In the process according to the invention, the liquid absorption medium **A_{VE}** preferably has a temperature in the range of 1 °C to < 100 °C, preferably 10 °C to 80 °C, more preferably 15 °C to 45 °C, even more preferably 20 °C to 30 °C.

The moist gas **G** used in the process according to the second aspect of the invention has in particular a temperature of 2°C to 100°C, preferably 3°C to 60°C, more preferably 4°C to 50°C, even more preferably 5°C to 40°C and is otherwise not subject to any particular restrictions.

The contacting may be effected in any way known to those skilled in the art, in particular in a water absorption unit **W_{abs1}** <200> (elucidated above and in Figures 2 A and 2 B). The contacting causes the liquid absorption medium **A_{VE}** to at least partially absorb moisture, i.e. water, from the moist gas **G.**

After step (a), a liquid absorption medium **A_{VE}*** and a gas **G*** are obtained. **A_{VE}*** corresponds to **A_{VE}** and has an elevated water content compared to **A_{VE},** which is the reason why **A_{VE}*** is "aqueous". Of note, the fact that **A_{VE}*** is "aqueous" does not mean that **A_{VE}** cannot contain water. In some embodiments of the invention, **A_{VE}** is also "aqueous".

The water content of **A_{VE}*** is preferably at least 1 weight-% higher that that of **A_{VE}**, more preferably at least 2 weight-% higher than that of **A_{VE}**, more preferably at least 3 weight-% higher than that of **A_{VE}**, more preferably at least 4 weight-% higher than that of **A_{VE}**, more preferably at least 5 weight-% higher than that of **A_{VE},** more preferably at least 6 weight-% higher than that of **A_{VE},** more preferably at least 7 weight-% higher than that of **A_{VE}**, more preferably at least 8 weight-% higher than that of **A_{VE},** more preferably at least 9 weight-% higher than that of **A_{VE},** more preferably at least 10 weight-% higher than that of **A_{VE}**.

These preferred embodiments also include the further preferable case in which the water content of **A_{VE}*** is in the range of 1 to 10 weight-% higher than that of **A_{VE}**, and likewise include the two preferred cases in which the water content of **A_{VE}*** is in the range of 1 to 5 weight-% higher than that of **A_{VE}** or in which the water content of **A_{VE}*** is in the range of 2 to 10 weight-% higher than that of **A_{VE}.**

**G*** corresponds to **G** and has a reduced water content compared to the moist gas **G,** preferably reduced by at least 10 weight-%, more preferably reduced by at least 20 weight-%, more preferably reduced by at least 30 weight-%, more preferably reduced by at least 40 weight-%, more preferably reduced by at least 50 weight-%, more preferably reduced by at least 60 weight-%, more preferably reduced by at least 70 weight-%, more preferably reduced by at least 80 weight-%, more preferably reduced by at least 90 weight-%, more preferably reduced by at least 95 weight-%, more preferably reduced by at least 99 weight-%, compared to **G.**

The liquid absorption medium **A_{VE}*,** due to the absorption heat when moisture is absorbed into **A_{VE},** may have a temperature that is higher than that of **A_{VE}**.

### 4.2.2 Step (b): Contacting A_{VE}* and power unit PU and desorbing

Step (b) according to the second aspect of the invention comprises at least partially desorbing water from liquid absorption medium **A_{VE}*** by transferring heat from power unit **PU** to liquid absorption medium **A_{VE}*,** to obtain water vapour **V_{H2O}** and liquid absorption medium **A_{VE}**** with a reduced water content compared to the liquid absorption medium **A_{VE}***. The power unit **PU** can be any means by which the vehicle can be powered and by which waste heat is generated. It is preferably selected from the group consisting of a motor **M,** battery **B.** The power unit **PU** can also be a hybrid technology engine, thus comprising at least one battery **B** and at least one motor **M.**

The transferring of heat to liquid absorption medium **A_{VE}*** from the power unit **PU** can be achieved by contacting the two. This can be effected by methods known to the person skilled in the art. For example, such setup is depicted in WO 2010/088978 A1 or in P. Sharma, M. Parwal, E. Ayyar, SAE Technical Paper 2018-28-0013, 2018 (DOI: 10.4271/2018-28-0013).

Alternatively, in case of a power unit **PU** running on petrol, diesel, or another fossil combustible material, for example fuel oil, the heat from the motor **M** can also be transferred onto **A_{VE}** by contacting **C** with the exhaust fumes of the motor **M.** For example, such use of the heat from the exhaust fumes is depicted in US 2006/0130469 A1. Under item 4.1.3 and in Figures 1 A and 1 B, a water desorption unit **W_{des}** <100> is depicted, in which such contacting and transferring of heat is effected,

After step (b), water vapour **V_{H2O}** and liquid absorption medium **A_{VE}**** with a reduced water content compared to the liquid absorption medium **A_{VE}*** are obtained. It is preferable that liquid absorption medium **A_{VE}*** has a temperature that is higher than the temperature of liquid absorption medium **A_{VE}****, in particular by a difference of 1 °C to 30 °C, more preferably 5 °C to 20 °C, even more preferable 10 °C to 15 °C.

Step (b) of the process according to the second aspect of the invention comprises at least partially desorbing water vapour **V_{H2O}** from liquid absorption medium **A_{VE}*** by transferring heat from power unit **PU** to liquid absorption medium **A_{VE}*,** so to obtain water vapour **V_{H2O}** and liquid absorption medium **A_{VE}**** with a reduced water content compared to the liquid absorption medium **A_{VE}***.

It is preferable that the process according to the second aspect of the invention is controlled so that the temperature of **A_{VE}*** is lower than the temperature of the power unit **PU** by at least 1 °C, more preferably at least 2 °C, more preferably at least 3 °C, more preferably at least 4 °C, more preferably at least 5 °C, more preferably at least 6 °C, more preferably at least 10 °C, more preferably at least 11 °C, more preferably at least 12 °C, more preferably at least 15 °C, more preferably at least 17 °C, more preferably at least 20 °C, more preferably at least 25 °C, more preferably at least 30 °C.

This includes the preferable cases in which the process according to the second aspect of the invention is controlled so that the temperature of **A_{VE}*** is lower than the temperature of the power unit **PU** by a temperature difference in the range of 1 °C to 30 °C, more preferably in the range of 2 °C to 25 °C, more preferably in the range of 3 °C to 20 °C, more preferably in the range of 4 °C to 17 °C, more preferably in the range of 5 °C to 15 °C, more preferably in the range of 6 °C to 12 °C, more preferably in the range of 10 °C to 11 °C.

The temperature of **A_{VE}*** can for example be controlled by the skilled person by controlling the absorption of water into **A_{VE}** in step (a) of the process according to the second aspect of the invention, as this absorption, due to the absorption heat, elevates the temperature of **A_{VE}**. In addition, the temperature of **A_{VE}** can be elevated (or reduced) by a heat exchanger during step (a) of the process according to the second aspect of the invention.

**A_{VE}**** corresponds to **A_{VE}*** and is characterized in that it has a reduced water content as compared to **A_{VE}***. The water content of **A_{VE}**** depends on the conditions set up in step (b) of the process according to the second aspect of the invention.

Preferably, in step (b), water vapour **V_{H2O}** is desorbed from **A_{VE}*** until **A_{VE}**** has a water content which is at least 1 weight-% lower than that of **A_{VE}*,** more preferably at least 2 weight-% lower than that of **A_{VE}*,** more preferably at least 3 weight-% lower than that of **A_{VE}*,** more preferably at least 4 weight-% lower than that of **A_{VE}*,** more preferably at least 5 weight-% lower than that of **A_{VE}*,** more preferably at least 6 weight-% lower than that of **A_{VE}*,** more preferably at least 7 weight-% lower than that of **A_{VE}*,** more preferably at least 8 weight-% lower than that of **A_{VE}*,** more preferably at least 9 weight-% lower than that of **A_{VE}*,** more preferably at least 10 weight-% lower than that of **A_{VE}***.

These preferred embodiments also include the further preferable case in which the water content of **A_{VE}**** is in the range of 1 to 10 weight-% lower than that of **A_{VE}*,** and likewise include the two preferred cases in which the water content of **A_{VE}**** is in the range of 1 to 5 weight-% lower than that of **A_{VE}*** or in which the water content of **A_{VE}**** is in the range of 2 to 10 weight-% lower than that of **A_{VE}***.

As the desorption of **V_{H2O}** from **A_{VE}*** also consumes heat, step (b), in an alternative preferable embodiment, is controlled by the reduction of temperature. Accordingly and preferably, in step (b), vapour **V_{H2O}** is desorbed from **A_{VE}*** until the resulting **A_{VE}**** has a temperature which is at least 1 °C, preferably at least 2 °C, more preferably at least 3 °C, more preferably at least 4 °C, more preferably at least 5 °C, more preferably at least 6 °C, more preferably at least 7 °C, more preferably at least 8 °C, more preferably at least 9 °C, more preferably at least 10 °C lower than the temperature of **A_{VE}***.

In another preferable embodiment, in step (c), vapour **V_{H2O}** is desorbed from **A_{VE}*** until the resulting **A_{VE}**** in addition has a temperature of 1 °C to < 100 °C, preferably 10 °C to 90 °C, more preferably 12 °C to 65 °C, more preferably 15 °C to 45 °C, even more preferably 20 °C to 30 °C.

This desorption may be effected in any way known to those skilled in the art, in particular in a water desorption unit **W_{des1}** <100> (elucidated above and in Figures 1 A and 1 B).

To further facilitate desorption of water vapour **V_{H2O}** from **A_{VE}*,** a subnormal pressure is preferably applied to **A_{VE}*** in step (b). In a further preferred embodiment, step (b) of the second aspect of the invention is carried out at a pressure of < 1 bar, preferably < 800 mbar, more preferably < 500 mbar, more preferably < 200 mbar.

Likewise, to further facilitate desorption of water vapour **V_{H2O}** from **A_{VE}*,** further heat in addition to the heat from power unit **PU** can be supplied to **A_{VE}*** during step (b), for example by a heat exchanger, such as heat exchanger <108> described *supra.* Alternatively, the heat exchanger can also be used to cool (= to absorb heat from) **A_{VE}**** at the end of the desorption, so to facilitate absorption efficiency of **A_{VE}**** when used again as **A_{VE}** in a further cycle of absorption.

### 4.2.3 Preferred Step (c): Continuous process

In a preferred embodiment of the process according to the second aspect of the invention, it further comprises step (c).

In preferred step (c), **A_{VE}**** is contacted with further moist gas **G. A_{VE}**** is thus subjected to another round of step (a) of the process according to the second aspect of the invention, and takes the role of liquid absorption medium **A_{VE}** in that step. The water content and the temperature of **A_{VE}** in that step (c) is preferably the water content and the temperature, respectively, of **A_{VE}**** at the end of step (b).

The process according to the second aspect of the invention is preferably carried out in a continuous manner, as would be typically the case in a vehicle, where a continuous process of cooling the power unit and absorbing water from a moist gas would be the normal mode of operation.

### 4.2.4 Preferred Embodiment: Cooling of the interior of a vehicle or a component O_{B}

In a preferred embodiment of the process according to the second aspect of the invention, it is used for cooling air from inside the vehicle or for cooling a component **O_{B}** of the vehicle, wherein **O_{B}** is different from the power unit **PU.** It goes without saying that the process according to the second aspect of the invention can also be used for cooling both air from inside the vehicle and component **O_{B}.**

Preferably, **O_{B}** is a component in the passenger area of the vehicle, such as a computer server or furnishings within the vehicle.

"Air from inside the vehicle" preferably refers to air from the passenger area of the vehicle.

"Passenger area" refers to areas where passengers usually are located during the operation of the vehicle, and also refers to the area where ridership, drivers, conductors, pilots, captains are seated during operation of the vehicle.

This preferred embodiment of the process according to the second aspect of the invention is preferably carried out in a cooling component **WIC** <400> as elucidated above and as shown in Figure 4.

In this preferred embodiment of the process according to the second aspect of the invention, water vapour **V_{H2O}** is condensed to obtain liquid water **L_{H2O}**. This can for example be achieved in a water condenser **W_{Con}** <401> as shown in Figure 4 and elucidated above. The thus obtained liquid water **L_{H2O}** then absorbs heat from the air inside the vehicle or a component of the vehicle **O_{B}**. This can for example be achieved in a water evaporator **W_{Ev}**, <403> as shown in Figure 4. This evaporation is the crucial step to exert the cooling effect on the air inside the vehicle or **O_{B}**. By this step, water vapour **V_{H2O}*** is obtained.

That water vapour **V_{H2O}*** is thus subjected to another round of step (a) of the process according to the second aspect of the invention, and in this further round takes the role of moist gas **G.** In other words, water vapour **V_{H2O}*** is then contacted as moist gas **G** with liquid absorption medium **A_{VE}**.

The process according to the second aspect of the invention is preferably carried out in a vehicle according to the first aspect of the invention.

### 4.3 Gist of the invention

The vehicle according to the first aspect of the invention and the process according to the second aspect of the invention provide a surprisingly efficient use of waste heat from the power unit by using it to dehumidify a moist gas, for example in the context of an absorption refrigeration machine in which water is the refrigerant. This efficiency is achieved the feature that the absorbent contacts the power unit directly, which allows for a highly efficient transfer of the power unit waste heat onto the absorbent.

## Claims

1. A vehicle, comprising:
(i) a liquid absorption medium **A_{VE}** <109>,
(ii) at least one water absorption unit **W_{abs}** <200>, which is set up for contacting a moist gas **G** <210>, with the liquid absorption medium **A_{VE}** <109>, to obtain an aqueous liquid absorption medium **A_{VE}*** <109*> with an elevated water content compared to **A_{VE}** <109> and a gas **G*** <210*> with a reduced water content compared to the moist gas **G** <210>,
(iii) at least one water desorption unit **W_{des}** <100>,
(iv) and a circuit **U_{WAC}** which connects the at least one water absorption unit **W_{abs}** <200> with the at least one water desorption unit **W_{des}** <100>, and by means of which the liquid absorption media **A_{VE}** <109> and **A_{VE}*** <109*> may be circulated between the water absorption unit **W_{abs}** <200> and the water desorption unit **W_{des}** <100>,
(v) at least one power unit **PU** <111>, which is preferably selected from the group consisting of motor **M** <303>, battery **B** <305>,
wherein the liquid absorption medium **A_{VE}** <109> comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO , wherein R*, R', R" are each independently of one another an alkyl group,
wherein R¹, R², R³ are each independently of one another an alkyl group,
and wherein M⁺ is an alkali metal ion,
**characterized in**
**that** the water desorption unit **W_{des}** <100> is set up
- to at least partially desorb water from liquid absorption medium **A_{VE}*** <109*> by transferring heat from the at least one power unit **PU** <111> to liquid absorption medium **A_{VE}*** <109*>, to obtain water vapour **V_{H2O}** <104> and liquid absorption medium **A_{VE}**** <109**> with a reduced water content compared to the liquid absorption medium **A_{VE}*** <109*>,
- and to conduct at least a part of liquid absorption medium **A_{VE}**** <109**> as liquid absorption medium **A_{VE}** <109> from the water desorption unit **W_{des}** <100> to the water absorption unit **W_{abs}** <200>.

2. The vehicle according to Claim 1, wherein power unit **PU** <111> comprises a metal surface, via which heat can be transferred from power unit **PU** <111> to liquid absorption media **A_{VE}*** <109*> or **A_{VE}**** <109**>.

3. The vehicle according to Claim 1 or 2, which further contains
(vi) at least one cooling component **WIC** <400> for cooling air from inside the vehicle or a component **O_{B}** of the vehicle, wherein **O_{B}** is different from the power unit **PU** <111>, comprising
(vi-a) water as a refrigerant,
(vi-b) at least one water condenser **W_{Con}** <401> set up for at least partially condensing water vapour **V_{H2O}** <104> into liquid water **L_{H2O}** <402>,
(vi-c) at least one water evaporator **W_{Ev}** <403>, set up for at least partially evaporating liquid water **L_{H2O}** <402>, so to obtain water vapour **V_{H2O}*** <406>,
wherein the water evaporator **W_{Ev}** <403> comprises a surface, which is preferably made from metal, which contacts air from inside the vehicle or which contacts **O_{B}**, so that heat from the air or **O_{B}** can be transferred to liquid water **L_{H2O}** <402> inside the water evaporator **W_{Ev}** <403> to evaporate liquid water **L_{H2O}** <402> to obtain water vapour **V_{H2O}*** <406>,
(vi-d) and a conduit **U_{WIC}** which connects the at least one water desorption unit **W_{des}** <100> with the at least one water condenser **W_{Con}** <401>, the at least one water condenser **W_{Con}** <401> with the at least one water evaporator **W_{Ev}** <403>, and the at least one water evaporator **W_{Ev}** <403> with the at least one water absorption unit **W_{abs}** <200>, and by means of which water vapour **V_{H2O}** <104> may be conducted from the at least one water desorption unit **W_{des}** <100> to the at least one water condenser **W_{Con}** <401>, and by means of which liquid water **L_{H2O}** <402> may be conducted from the at least one water condenser **W_{Con}** <401> to the at least one water evaporator **W_{Ev}** <403>, and by means of which water vapour **V_{H2O}*** <406> may be conducted from the at least one water evaporator **W_{Ev}** <403> as moist gas **G** <210> to the at least one water absorption unit **W_{abs}** <200>.

4. A process for combined cooling of a power unit **PU,** and absorbing water from a moist gas **G** in a vehicle, comprising the following steps:
(a) contacting a moist gas **G** with a liquid absorption medium **A_{VE},** to obtain a liquid absorption medium **A_{VE}*** with an elevated water content compared to the liquid absorption medium **A_{VE},** and a gas **G*** with a reduced water content compared to the moist gas **G,**
(b) at least partially desorbing water from liquid absorption medium **A_{VE}*** by transferring heat from power unit **PU** to liquid absorption medium **A_{VE}*,** to obtain water vapour **V_{H2O}** and liquid absorption medium **A_{VE}**** with a reduced water content compared to the liquid absorption medium **A_{VE}*,** wherein the liquid absorption medium **A_{VE}** comprises at least one salt **S** selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of halogenide, R*COO⁻, R'SO₃⁻, HSO₄⁻, R"SO₄⁻, HCOO⁻, wherein R*, R', R" are each independently of one another an alkyl group,
wherein R¹, R², R³ are each independently of one another an alkyl group,
and wherein M⁺ is an alkali metal ion.

5. The process according to Claim 4, which further comprises step (c):
(c) contacting at least a part of liquid absorption medium **A_{VE}**** with further moist gas **G.**

6. The process according to Claim 4 or 5, wherein in step (b) the temperature of **A_{VE}*** is lower than the temperature of **PU** by at least 1 °C.

7. The process according to one of Claims 4 to 6, wherein step (b) is carried out at a pressure of < 1 bar.

8. The process according to one of Claims 4 to 7, wherein in step (b), further heat is supplied to **A_{VE}*** by a heat exchanger during the desorption of water vapour **V_{H2O}** to give liquid absorption medium **A_{VE}**** .

9. The process according to one of Claims 4 to 8, which is for cooling air from inside the vehicle or for cooling a component **O_{B}** of the vehicle, wherein **O_{B}** is different from the power unit **PU,**
wherein water vapour **V_{H2O}** is condensed to obtain liquid water **L_{H2O},**
wherein liquid water **L_{H2O}** then absorbs heat from the air inside the vehicle or a component of the vehicle **O_{B}**, and is evaporated so to obtain water vapour **V_{H2O}*,**
wherein water vapour **V_{H2O}*** is then contacted as moist gas **G** with liquid absorption medium **A_{VE}**.

10. The process according to one of Claims 4 to 9, which is carried out in a continuous manner.

11. The process according to one of Claims 4 to 10, carried out in the vehicle according to one of Claims 1 to 3.
